# EUROPEAN PATENT SPECIFICATION

(11) **EP 4 183 013 B1**
(45) Date of publication and mention of the grant of the patent: **31.12.2025**
(21) Application number: 21814825.2
(22) Date of filing: 12.11.2021
(51) Int. Cl.: H02G 3/12, H02G 3/14

(54) **A SYSTEM FOR ATTACHING TO A SOCKET BOX INSIDE A WALL**
SYSTEM ZUR BEFESTIGUNG AN EINEM SOCKELGEHÄUSE IN EINER WAND
SYSTÈME DE FIXATION À UN BOÎTIER DE PRISE À L'INTÉRIEUR D'UNE PAROI

(30) Priority: 18.11.2020 FI 20206169
(43) Date of publication of application: 24.05.2023
(73) Proprietor: Ouman OY, 26100 Rauma (FI)
(72) Inventor: RINTANEN, Pauli, 26100 Rauma (FI)
(74) Representative: Moosedog Oy
(86) International application number: PCT/FI2021/050768
(87) International publication number: WO 2022/106752

(56) References cited:
- EP-A1- 2 390 977
- DE-B1- 1 775 074
- FR-A1- 2 724 065
- JP-A- 2008 108 529

## Description

### TECHNICAL FIELD

The present disclosure relates to a system that can be attached to a socket box. The present disclosure also relates to a method for attaching the aforesaid system to the socket box.

### BACKGROUND

Systems that can be attached to a socket box known in prior art generally cover thermostats, socket outlets, switches, including light switches, etc. The socket box is normally installed onto or under a surface, for example a wall or floor. These systems normally comprise a body part, a frame, and a cover. The cover and the body part can be any kind of cover and body part depending on the use and purpose of the system. The body part houses electronics for example for a thermostat, a switch, a socket outlet and so on. The cover can be a user interface part of the thermostat, the switch, the socket outlet and so on. The frame is attached to the body part and covers a part of the surface, when attached. The frame of the mentioned systems is normally attached to the body part via attachments means, which keep the frame fixed on the surface and the body part, thereby allowing no movement between the frame, the body part and the surface. The attachment means normally used are clips, screws or other suitable fixing means with fixing function. Another example for fixing these systems comprise a separate fixing frame, which is used to fix the frame and the body part on the surface. The socket box is normally located under the surface and the socket box can be accessed through an opening in the surface. The body part is attached onto the socket box under the surface through the opening inside the surface. The frame is attached to the body part and the frame is located on the surface. Therefore, it is important, that the surface, where the system is attached, is an even and smooth surface, otherwise it is difficult to attach the frame onto the body part as the frame also covers the surface. The systems known in the prior art are well suitable for surfaces without any curvatures and unevenness. However, when the systems known in the prior art need to be attached to a surface, which is uneven or has curvatures, for example floors, walls or ceilings in old houses or a wall with special design, then attaching the frame to the body part of the system with known fixing means may leave an undesirable gap between the frame and the surface. Also, if the surface unevenness is greater, it may be difficult to attach the frame onto the body part with known fixing means, which leads to a problem, that these types of systems are not attachable to any chosen surface.

Document EP 2 390 977 A1 discloses a system which is insertable to different depths into an electrical installation device and fixable there for compensation of surface unevenness. The system has spring elements, which are fastened to the frame or, preferably, formed integrally therewith, wherein each spring element is formed of four joints. The spring elements allow the frame to protrude from the frame to varying distances under spring action.

Therefore, in light of the foregoing discussion, there exists a need to overcome various problems associated with conventional systems comprising at least the body part and the frame and normally attached to the socket box and the surface, which can be a wall, a floor or a ceiling, where the socket box is under the surface.

### SUMMARY

The present disclosure seeks to provide a system and method that specifically addresses problems related to general difficulties of attaching the system to an uneven surface leaving a gap between the frame and the surface and the problem that the system cannot be attached to a desired surface because of the unevenness of the surface.

An aim of the present disclosure is to provide a solution that overcomes at least partially the problems encountered in prior art and provide a system that can be attached to a socket box under an uneven surface.

In one aspect of the present invention, a system is defined in claim 1, said system comprising:
- a frame comprising:
   o an opening,
   o a protrusion arranged in the opening on an inner side of the frame;
- a spring element;
- a body part comprising;
   o a guide arranged to guide the spring element with respect to the body part and the frame,
   o attaching means arranged to removably attach the spring element onto the body part, wherein the attaching means comprise:
      ▪ locking means configured to lock the spring element pivotably onto the body part, and
      ▪ fixing means configured to fix the spring element on the body part;
      wherein the spring element is
   o arranged to press the protrusion of the frame with a force to flexibly fix the frame onto the body part while the spring element is attached onto the body part with the locking means and the fixing means.

In another aspect defined in claim 13, the invention concerns a method for attaching the system to a socket box under a surface, the method comprising:
- attaching the body part to the socket box through an opening in the surface,
- attaching the spring element to the body part with locking means, wherein the locking means are configured to lock the spring element pivotably onto the body part,
- placing the frame onto the body part, the frame comprising an opening and a protrusion arranged in the opening on an inner side of the frame, and wherein the protrusion at least partially covers the body part, and the frame at least partially covers the surface,
- attaching the spring element with fixing means, wherein the fixing means are configured to fix the spring element on the body part, wherein the spring element is arranged to press the protrusion of the frame, with a force to flexibly fix the frame onto the body part.

Embodiments of the present disclosure substantially eliminate or at least partially address the aforementioned problems in the prior art and enable to flexibly fix the frame to the body part of the system, thereby allowing flexible movement between the frame, the body part and the surface in case of an uneven surface, leaving no undesirable gaps between the frame and the surface.

Additional aspects, advantages, features, and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific embodiments disclosed herein. Moreover, those in the art will understand that the drawings are not to scale. Wherever possible, elements have been indicated by identical numbers.

Embodiments of the present disclosure will now be described, by way of example only, with reference to the following drawings wherein:
FIG. 1 illustrates an exploded view of a system;
FIG. 2 illustrates installation of a system in a socket box;
FIG 3A illustrates a general view of an assembled system;
FIG. 3B illustrates a side view of an assembled system;
FIG. 4A illustrates a front view of a body part with a spring element;
FIG. 4B illustrates a front view of a system with a body part, a spring element and a frame;
FIG. 5A illustrates a front view of a spring element;
FIG. 5B illustrates a bottom view of a spring element;
FIG. 5C illustrates a side view of a spring element;
FIG. 6A illustrates a general view of a body part with a spring element in an open position;
FIG. 6B illustrates a general view of a body part with a spring element in a closed position;
FIG. 7A illustrates a section view from bottom of a body part with a spring element in closed position;
FIG. 7B illustrates a section view from top of a body part with a spring element in closed position; and
FIG. 8 illustrates a 3D view of a spring according to one embodiment.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect of the invention, a system is defined, said system comprising:
- a frame comprising:
   o an opening,
   o a protrusion arranged in the opening on an inner side of the frame;
- a spring element;
- a body part comprising;
   o a guide arranged to guide the spring element with respect to the body part and the frame,
   o attaching means arranged to removably attach the spring element onto the body part, wherein the attaching means comprise:
      ▪ locking means configured to lock the spring element pivotably onto the body part, and
      ▪ fixing means configured to fix the spring element on the body part;
      wherein the spring element is
   o arranged to press the protrusion of the frame with a force to flexibly fix the frame onto the body part while the spring element is attached onto the body part with the locking means and the fixing means.

In another aspect of the invention, a method is defined, said method for attaching the system to a socket box under a surface, the method comprising:
- attaching the body part to the socket box through an opening in the surface,
- attaching the spring element to the body part with locking means, wherein the locking means are configured to lock the spring element pivotably onto the body part,
- placing the frame onto the body part, the frame comprising an opening and a protrusion arranged in the opening on an inner side of the frame, and wherein the protrusion at least partially covers the body part and the frame at least partially covers the surface,
- attaching the spring element with fixing means, wherein the fixing means are configured to fix the spring element on the body part, wherein the spring element is arranged to press the protrusion of the frame, with a force to flexibly fix the frame onto the body part.

Throughout the present disclosure, the term "system" herein relates to an electrical or electronical system, that is attachable to a socket box. The socket box could be located on or under a surface. The surface could be a wall, a floor or a ceiling, but can be any other suitable surface, where the socket box and the aforesaid system is required. The system can be, for example, a thermostat, a light switch, a socket outlet and so on.

The socket box, also called as a back box or a mounting box, could be made of a metal, plastic or any suitable material that is fitted onto or under a surface for a wiring installation. The socket box enables to connect cables from the surface to the system, for example to a socket outlet or a switch, and also protects terminals and cables. The socket box can be of any type and have any shape depending on the system to be attached to the socket box. The socket box can be fitted under a surface or have a special configuration to be attached on a surface. The socket box provides a rear housing required for fitting, for example, a switch or a socket outlet.

The surface can be of any kind of surface, where the socket box can be placed or fitted for electrical or electronical connections. The surface can comprise an opening for accessing the socket box. The surface can comprise a front surface and a back surface, where the back surface is located under the front surface. The socket box is attached to the back surface and is located under the front surface, where the front surface has an opening for accessing the socket box. However, as the system is to be attached to the socket box, which is under the front surface; the term "surface" in the present disclosure refers to the "front surface" if not specified otherwise. Examples of the surface include, but are not limited to, a wall, a floor, and a ceiling. The surface can be inside or outside of a building or any other installation comprising wiring for electrical or electronical connections. The surface can be with or without any curvatures or unevenness. For example, the surface with unevenness can be a wall, a floor or a ceiling inside an old building or an old floor, wall or ceiling inside or outside of a building. The surface can also be a surface with a special design having curvatures or unevenness. The surface can comprise of multiple parts, which result in an overall surface to be uneven.

The system of the present disclosure comprises a spring element, a body part, a frame and optionally a cover. Herein, the spring element, the body part, the frame, and the cover may be separate parts from each other.

The body part comprises electronics of the system. The electronics of the body part may be, for example, for a switch, a socket, a thermostat, or the like. The body part is attachable to the socket box through the opening inside the surface. The body part could have a rectangular, square or polygonal shape. Alternatively, the body part may have other shapes, for example, an oval or a round shape.

The body part may also comprise at least one opening for attachment means for attaching the body part to the socket box. In an embodiment, the body part comprises one opening on each corner of the body part. In another embodiment, the body part comprises one opening on each side of the body part. In yet another embodiment, the body part comprises one opening in each corner and each side of the body part. For attaching the body part to the socket box through the opening in the surface, the attachment means are placed through the openings of the body part and the attachment means are attached to the surface. The attachment means may be chosen for example from screws, nails, clips, rivets or any other attachment means with similar function. Alternatively, any other attachment means can also be used. The openings of the body part enable easy attachment and fixing of the body part to the socket box.

The body part comprises a guide arranged to guide the spring element with respect to the body part and a frame. The guide may comprise protrusions on the body part. The guide may comprise a single guide element or several separate guide elements located in different places in or on the body part. In one embodiment, the guide comprises protrusions arranged on different locations on the body part. Optionally, in this regard, the guide comprises three protrusions arranged to guide the spring element on three different locations on the body part. At least one of the protrusions is arranged to keep the spring element equally located in respect of a center and sides of the body part. At least one of the protrusions is arranged to guide the spring element relative to protrusions of the frame to fix the frame on the body part. Therefore, the function of the protrusions of the guide is to ensure that the spring element is attached securely and easily to the body part and the frame. This also results in more reliable fastening of the spring element, as it is important that the spring element is correctly placed with respect to the center and the sides of the body part and protrusions of the frame.

The attaching means of the body part comprise locking means and fixing means. The attaching means are arranged to removably (namely, detachably) attach the spring element onto the body part. The locking means and fixing means ensure quick, simple, reliable, and flexible fixing of the spring element and the frame.

The locking means are configured to lock the spring element pivotably. The locking means securely fasten the spring element in a way that the spring element can pivot about the locking means. The spring element can be attached with the locking means using at least two portions of the spring element. Details of such portions will be provided later. These portions serve as an axis, about which the spring element is able to pivot when attached with the locking means. The locking means can be selected as at least one of: tubular shaped locking means, clips, brackets, clamps, anchors, rivets.

In an embodiment, the locking means comprises at least two locking units, wherein a given locking unit is arranged on a corresponding side of the guide element. In one embodiment, a given locking unit comprises a protrusion and a hook. The protrusion and the hook are arranged on the body part in a way that when the spring element is placed under the hook, the protrusion presses the spring element against the hook and the spring element is securely locked with the locking means. This enables easy locking of the spring element, while allowing the spring element to pivot about the locking means. By facilitating the pivoting movement of the spring element when attached with the locking means, the frame can be easily placed onto the body part before it is flexibly and detachably fixed by the fixing means. Also, this configuration allows easy uninstallation of the frame onto the body part, as once the spring element is detached from the fixing means, the frame can be easily displaced.

The fixing means are configured to fix the spring element on the body part, when the spring element is attached with both the locking means and the fixing means. This means that when locking means enable the spring element to move pivotably about the locking means, the fixing means fixes the spring element in a steady position, thereby allowing a flexible movement of various portions of the spring element that are not attached with the locking means or the fixing means. In an embodiment, the fixing means are hook shaped fixing means. The fixing means can be selected to be at least one of: hook shaped fixing means, screws, clips, brackets, clamps, anchors, rivets. In other embodiments, other fixing means with similar function to keep the spring element fixed on the body part may be used.

The frame comprises an opening and a protrusion arranged in the opening of the inner side of the frame. The frame could have a rectangular, square or any polygonal shape. Alternatively, the frame may be of a circular or oval shape. In an embodiment, the frame comprises protrusions on each side of an inner periphery of the frame. In another embodiment, the frame comprises protrusions on each corner of the inner periphery of the frame, wherein a given protrusion continuously extends between neighboring sides of the frame. In yet another example protrusions are at least on two inner sides of the frame. In the case of circular or oval shaped frames, a given protrusion may continuously or discontinuously extend along the inner periphery of the frame. The length of the protrusions may be in the range of 29 to 32 mm. The length of the protrusions may be from 29, 29.5, 30, 30.5, 31 mm up to 30.5, 31, 31.5, 32 mm. The width of the protrusion maybe in the range of 1 to 10 mm.

The width of the protrusions may be from 1, 2, 3, 4, 5, 6, 7 mm up to 3, 4, 5, 6, 7, 8, 9, 10 mm. The thickness of the protrusions may be in the range of 0.1 to 1 mm. The thickness of the protrusions may be from 0.1, 0.2, 0.3, 0.4, 0.5 mm up to 0.3, 0.4, 0.5, 0.6, 0.7, 0.8, 0.9, 1.0 mm.

When the frame is attached onto the body part it covers outer edges of the body part, i.e., the frame covers a part of the body part when seen from a front. The opening of the frame leaves most of the body part uncovered allowing connections to be made, for example, with the cover. When the spring element is attached with the locking means, the frame is placed onto the body part. This way, various portions of the spring element press onto the protrusions of the frame with a force, which keeps the frame flexibly fixed on the body part. As further example if the body part is installed entirely below surface level of a wall, the frame might not be in direct contact with the body part at all. The frame placed onto the body part might refer to a situation on which the frame is in a direct physical contact with the body part, or it can refer to another situation in which the frame is pressed towards onto the body part with a force of the spring element, but there is a gap between the body part and the frame. Indeed, in such an example the frame movement to be in direct contact with body part is limited by the surface on which the body part is installed.

The spring element is made of a flexible material, which allows the flexible movement of the spring element, while it is attached onto the body part with the attaching means. In an embodiment, the spring element is made of a wire. The wire can be made of a metal, for example, chosen from iron, copper, and aluminum. The wire can alternatively be made of an alloy, for example, chosen from stainless steel, bronze, and brass. In another embodiment, the spring element is made of a plastic or any suitable polymer material. Alternatively, the spring can be made by pressing the spring part from a sheet of metal.

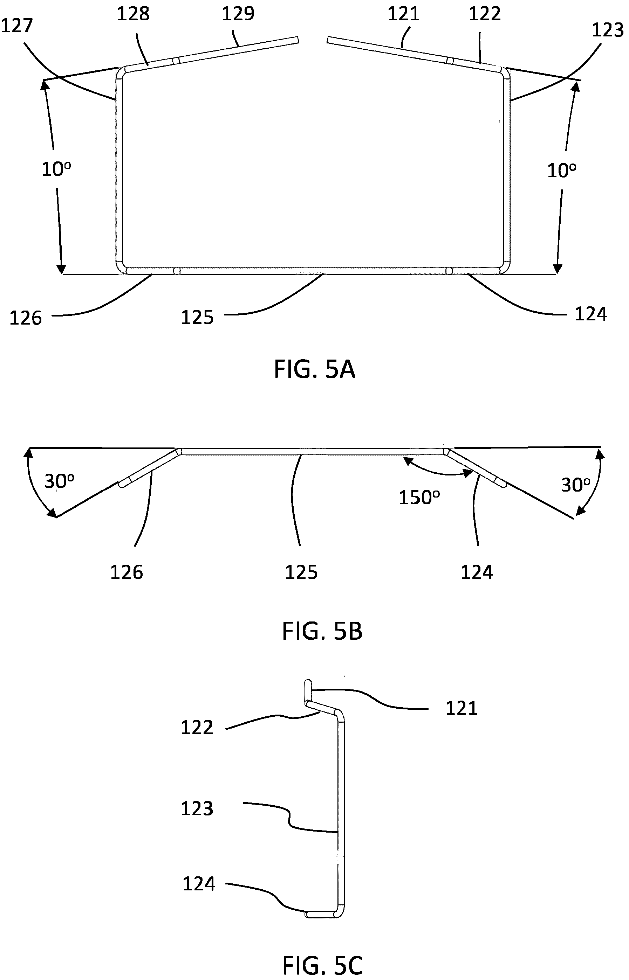

The spring element may have different shapes. For example, the spring element may be rectangular or polygonal in shape. The spring element may have a plurality of interconnected portions of different lengths which may be in an angular position relative to each other. Certain portions of the spring element may be straight in shape and certain other portions may be shaped curved. For example, when viewed from above, the spring element may appear substantially rectangular, as illustrated in FIG. 5A, and when viewed from the side, as illustrated in FIGs. 5B and 5C, the same spring element may be polygonal or curved, i.e., it may have straight, curved and/or angular portions. The desired shape of the spring element may depend on the system and/or the parts, and/or loads, it is designed to support and against which the force of the spring element is applied. With different shapes and materials, it may be possible to determine how and how much spring force is applied to parts of the system by the spring element.

The spring element may comprise at least nine portions. Each portion has a first end and a second end, a distance between a first end and a second end of a given portion defines a length of the given portion, wherein a cross-sectional dimension of each portion lies between 0.7 to 1.1 mm and wherein the portions form an open loop-like structure, wherein the at least nine portions comprise:
a) A first portion having a length of 17 to 19 mm. The length may be from 17, 17.5, 18 mm up to 18, 18.5, 19 mm. The first end of the first portion is an open end, and the first portion is arranged to be pivotably attached with the locking means onto the body part;
b) A second portion attached by its first end to the second end of the first portion. The second portion having a length from 7 to 11 mm. The length may be from 7, 8, 9, 10 mm up to 9, 10, 11 mm;
c) A third portion attached by its first end to the second end of the second portion. The third portion has a length from 29 to 32 mm. The length may be from 29, 29.5, 30, 30.5, 31 mm up to 30.5, 31, 31.5, 32 mm. The third portion is arranged to press the protrusion of the frame with the force, when the spring element is attached with the attaching means;
d) a fourth portion attached by its first end to the second end of the third portion. The fourth portion has a length from 7 to 11 mm. The length may be from 7, 8, 9, 10mm up to 9, 10, 11 mm;
e) a fifth portion is attached by its first end to the second end of the fourth portion. The fifth portion has a length from 34 to 38 mm. The length may be from 34, 35, 36 mm up to 36, 37, 38 mm. The fifth portion is arranged to be attached with the fixing means onto the body part;
f) a sixth portion is attached by its first end to the second end of the fifth portion. The sixth portion has a length from 7 to 11 mm. The length may be from 7, 8, 9, 10 mm up to 9, 10, 11 mm;
g) a seventh portion is attached by its first end to the second end of the sixth portion. The seventh portion having a length from 29 to 32 mm. The length may be from 29, 29.5, 30, 30.5, 31 mm up to 30.5, 31, 31.5, 32 mm. The seventh portion is arranged to press the protrusion of the frame with the force, when the spring element is attached with the attaching means;
h) an eighth portion attached by its first end to the second end of the seventh portion. The eighth portion having a length from 7 to 11 mm.

The length may be from 7, 8, 9, 10 mm up to 9, 10, 11 mm;
i) a ninth portion is attached by its first end to the second end of the eight portion and has its second end as an open end. The ninth portion has a length from 17 to 19 mm. The length may be from 17, 17.5, 18 mm up to 18, 18.5, 19 mm. The ninth portion is arranged to be pivotably attached with locking means onto the body part.

Such a spring element, while attached to the body part, enables a flexible movement between the spring element, the body part and the frame. This allows the system to be installed on an uneven surface without leaving any gaps between the surface and the frame.

The cross-section of each portion can be equal. This ensures simple manufacturing and production of the spring element and easy attachment, detachment of the spring element onto the body part. When the spring element has an equal cross-section, the locking means and the fixing means have complementary size parameters.

The portions of the spring element may define four planes. The planes being defined by the portions followingly:
- the first portion, the fifth portion and the ninth portion define a first plane;
- the second portion and the fourth portion define a second plane, wherein angle between the first plane and the second plane is from 150 to 170 degrees;
- the third portion and the seventh portion define a third plane, the third plane is parallel to the first plane;
- the sixth portion and the eighth portion define a fourth plane, wherein an angle between the fourth plane and first plane is 30-100 degrees.

The angle between the first plane and the second plane may be from 150, 155, 160 degrees up to 160, 165, 170 degrees. The angle between the fourth plane and the first plane may be from 30, 35, 40, 45, 50, 55, 60, 65, 70 degrees up to 50, 55, 60, 65, 70, 75, 80, 85, 90, 95, 100 degrees. The spring element having at least four planes with angles as defined previously ensures that when the spring element is attached to the body part, the spring element enables flexible movement between the body part and the frame. The third portion and the seventh portion apply a force on the protrusions of the frame, so that the frame is attached to the body part; the second portion, the fourth portion, the sixth portion and the eighth portion of the spring element enable the flexible movement of the frame. The system with the aforesaid spring element having at least four planes can be also attached to a socket box under the surface, which has unevenness or curvatures, as the spring element enables flexible movement between the surface and the frame leaving no gap between the surface and the frame.

Having predetermined angles between the planes ensures that the spring element applies enough force on the protrusions of the frame for securely fixing the frame to the body part. Also, having such planes enables the flexible movement of the frame with regard to the body part. The second plane and the fourth plane enable flexible movement of the spring element, when the spring element is attached to the body part. This configuration enables to easily attach and detach the spring element onto or from the body part and ensures secure and flexible fixation of the frame onto the body part. Such planes of the spring element ensure that the system can be attached to a surface, which is uneven or comprises curvatures, without leaving any gaps between the surface and the frame.

The portions of the spring element may be following:
- The first portion defines the first plane of the spring element. The first end of the first portion is an open end facing the second end of the ninth portion, where the second end of the ninth portion is also an open end. A distance between the first end of the first portion and second end of the ninth portion is from 3 to 7 mm. The distance between the first portion and the ninth portion may be for example from 3, 3.5, 4, 4.5, 5 mm up to 4.5, 5, 5.5, 6, 6.5, 7 mm. Such a distance between the first portion and the ninth portion enables the guide to guide the spring element in respect to the centre and sides of the body part. The first portion and the ninth portion are arranged to be pivotably attached with the locking means of the body part onto the body part. When the spring element is attached with the locking means, the first portion and the ninth portion of the spring element serve as an axis regarding which the spring element is able to pivot. In an embodiment of the present disclosure, at least one element of the guide of the body part will be located between the first end of the first portion and second end of the ninth portion. In an embodiment of the invention, the first end of the first portion and the second end of the ninth portion are against to the at least one element of the guide. This enables the guide of the body part to guide the spring element in respect to the center and sides of the body part and enables easy and secure fixing of the spring element and the frame onto the body part. The first portion and the ninth portion both have a length of 17 to 19 mm. The first portion may have length of from 17, 17.5, 18 mm up to 18, 18.5, 19 mm.
- The second portion defines the second plane of the spring element. The second plane is inclined in respect to the first plane. The second portion is attached by its first end to the second end of the first portion. The angle between the first portion and the second portion is from 150 to 170 degrees. The angle can be for example from 150, 155, 160 degrees up to 160, 165, 170 degrees. The second portion has a length from 7 to 11 mm. The second portion may have a length from 7, 8, 9, 10 mm up to 9, 10, 11 mm.
- The third portion defines the third plane of the spring element and is parallel to the first plane. The third portion is attached by its first end to the second end of the second portion. The third portion has a length from 29 to 32 mm. The third portion may have a length from 29, 29.5, 30, 30.5, 31 mm up to 30.5, 31, 31.5, 32 mm. The third portion is arranged to press the protrusion of the frame with the force, when the spring element is attached with the attaching means.
- The fourth portion is in the second plane. The fourth portion is attached by its first end to the second end of the third portion. The fourth portion has a length from 7 to 11 mm. The fourth portion may have a length from 7, 8, 9, 10 mm up to 9, 10, 11 mm.
- The fifth portion is in the first plane. The fifth portion is attached by its first end to the second end of the fourth portion. The fifth portion has a length from 34 to 38 mm. The fifth portion may have a length from 34, 35, 36 mm up to 36, 37, 38 mm. The fifth portion is arranged to be attached with the fixing means onto the body part.
- The sixth portion defines a fourth plane. The fourth plane is inclined in respect to the first plane. The sixth portion is attached by its first end to the second end of the fifth portion. The sixth portion has a length from 7 to 11 mm. The sixth portion may have a length from 7, 8, 9, 10 mm up to 9, 10, 11 mm.
- The seventh portion is in the third plane. The seventh portion is attached by its first end to the second end of the sixth portion and is parallel to the third plane. The seventh portion has a length from 29 to 32 mm. The seventh portion may have a length of from 29, 29.5, 30, 30.5, 31 mm up to 30.5, 31, 31.5, 32 mm. The seventh portion is arranged to press the protrusion of the frame with the force, when the spring element is attached with the attaching means.
- The eighth portion is in the fourth plane. The eighth portion is attached by its first end to the second end of the seventh portion. The eighth portion has a length from 7 to 11 mm. The eighth portion may have a length from 7, 8, 9, 10 mm up to 9, 10, 11 mm.
- The ninth portion is in the first plane. The ninth portion is attached by its first end to the second end of the eighth portion. The ninth portion has its second end as an open end. The ninth portion has a length from 17 to 19 mm. The ninth portion may have a length from 17, 17.5, 18 mm up to 18, 18.5, 19 mm. The ninth portion is arranged to be pivotably attached with the locking means onto the body part.

The spring element with such dimensions and properties enables easy fixing of the frame onto the body part and enables flexible movement of the frame in respect to the body part. The spring element may be attached to the body part with the first portion, the fifth portion and the ninth portion. The third portion and the seventh portion apply a force on the protrusions of the frame so that the frame is attached to the body part. The second portion, the fourth portion, the sixth portion and the eighth portion enable flexible movement of the spring element, which enables flexible movement between the body part and the frame. This allows the system to be attached to a surface, which may comprise uneven surface or curvatures and does not leave any gaps between the surface and the frame. Also, the spring element and the frame are simple to attach and detach from the frame and the body part and no special tools are necessary.

Optionally, the system further comprises a cover configured to be attached on the body part via the opening in the frame. A cover is an additional part of the system to be attached to a socket box, which covers the body part, the spring element and optionally at least a part of the frame. The cover may provide specific purpose for using the system to be attached to a socket box. As an example, via the cover, it may be possible to adjust the lights, the thermostat or to place a plug into a socket box. The cover may be a user interface part of the system. For example, the cover could provide a user interface of a socket, a switch, a thermostat or similar. In an embodiment, the cover may have an aesthetic purpose to give a special appearance or shape of the system.

The spring element may be a hold down relay clip. The hold down relay clip comprises of a flexible wire having at least four portions and forming a rectangular shape. The wire may have a first end and a second end facing one another and having a gap between the first end and the second end. The hold down relay clip is normally used to fix the body part to a socket box and enables easy installation and deinstallation of the body part from the socket box. When used for flexibly fixing the frame to the body part, the hold down relay clip is attached with attaching means on the body part. At least one portion of the hold down relay clip may be attached with the locking means and at least one portion may be attached with the fixing means onto the body part. The hold down relay clip may be guided from at least two portions to fit on the body part. Using the hold down relay clip as a spring element ensures secure and flexible fixation of the frame to the body part and the system can be easily attached to a surface having unevenness or curvatures without leaving any gaps between the surface and the system.

In an embodiment, the system is a thermostat. In this case the body part is configured to house electronics of the thermostat and the cover is a user interface part for the thermostat. The system being a thermostat ensures, that the thermostat can be attached to an uneven surface or a surface having curvatures without leaving any gaps between the surface and the frame.

A method for attaching a system to a socket box under a surface comprises:
- attaching a body part to the socket box through an opening in the surface,
- attaching a spring element to the body part with locking means, wherein the locking means are configured to lock the spring element pivotably,
- placing a frame onto the body part, the frame comprising an opening and a protrusion arranged in the opening on an inner side of the frame, and wherein the protrusion at least partially covers the body part and the frame at least partially covers the surface,
- attaching a spring element with the fixing means, wherein the fixing means are configured to fix the spring element on the body part, with a force to flexibly fix the frame onto the body part.

The method enables quick and reliable attachment of the system to a socket box under the surface through an opening in the surface. When the surface is uneven, the spring element enables flexible movement between the frame and the surface and therefore, no gaps will be left between the frame and the surface.

In an embodiment the system is assembled followingly:
- the body part is attached to the socket box through the opening in the surface, the first portion and the ninth portion of the spring element are attached with the locking means onto the body part;
- after the spring element is attached with the locking means, the frame is placed onto the body part in a way, that the protrusions of the frame at least partially cover the body part;
- after the frame is placed on the body part, the spring element is folded down in a way, that the third portion and the seventh portion of the spring element are pressing with a force on the protrusions of the frame;
- after the force is applied onto the protrusions of the frame by the third portion and the seventh portion of the spring element, the fifth portion of the spring element is attached with the fixing means of the body part;
- optionally, when the spring element and the cover are attached to the body part, the cover may be adjusted onto the frame and the body part.

The spring element is attached to the body part with the first portion, the fifth portion and the ninth portion. The third portion and the seventh portion apply a force on the protrusions of the frame so that the frame is attached to the body part. The second portion, the fourth portion, the sixth portion and the eighth portion enable flexible movement of the spring element, which enables flexible movement between the body part and the frame. The system can be attached also to a surface, which is uneven or has curvatures as the frame can flexibly move regarding to the body part depending on unevenness or curvature of the surface.

### DETAILED DESCRIPTION OF THE DRAWINGS

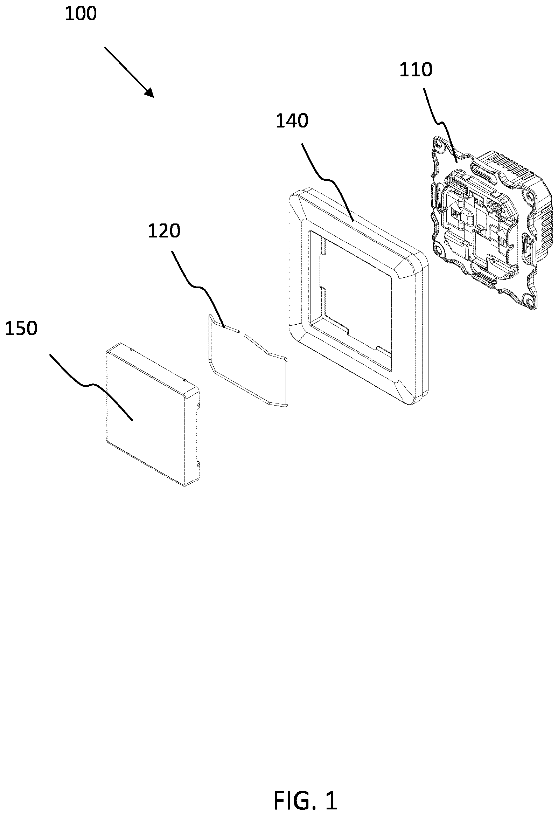

FIG. 1 illustrates an exploded view of a system **100,** in accordance with an embodiment of the present disclosure. The system **100** comprises a body part **110,** a frame **140,** a spring element **120** and a cover **150.**

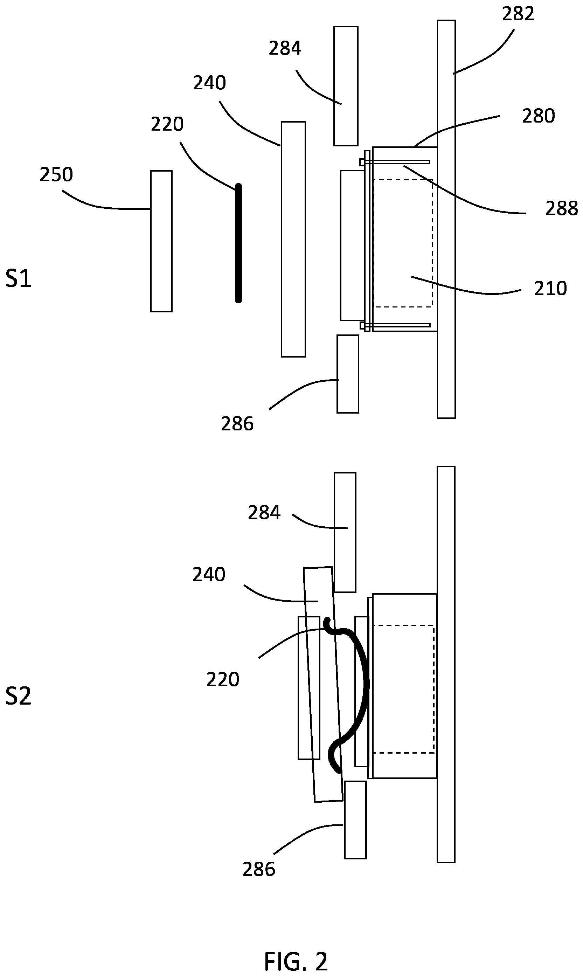

FIG. 2 illustrates an installation of a system to a socket box **280** in a wall. The wall comprises a front surface having an upper part **284** and a lower part **286** and a back surface **282.** The front surface comprises an opening between the upper part **284** and the lower part **286.** In step **S1,** a body part **210** of the system is installed partially inside of the socket box **280** through the opening in the front surface. The socket box **280** is installed inside the wall, behind the front surface on a back surface **282** of the wall. The front surface of the wall is an uneven surface; the upper part **284** of the front surface is not in line with the lower part **286** of the front surface. After installing the body part **210** partially inside the socket box **280,** the body part **210** is fastened with bolts **288** to the socket box **280.**

In step **S2,** the frame **240** is placed on the body part **210** and the front surface of the wall. A spring element **220** of the system is arranged to press a protrusion of the frame **240** with a force to flexibly fix the frame **240** on the body part **210.** The frame **240** is flexibly fixed and aligned with the uneven surface of the wall. A cover **250** of the system is then installed after installing the frame **240.**

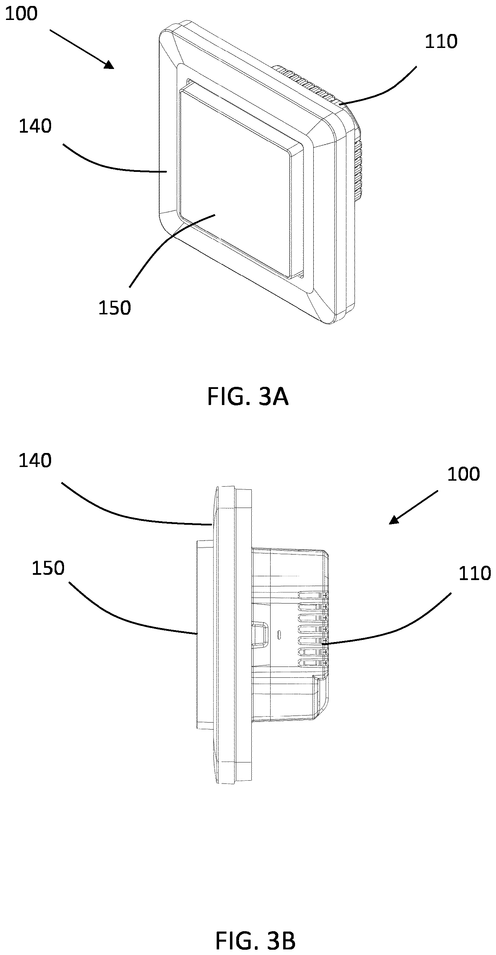

FIG 3A illustrates a general view of the assembled system **100** comprising the body part **110,** the frame **140** and the cover **150.**

FIG. 3B illustrates a side view of the assembled system **100** comprising a body part **110,** a frame **140** and a cover **150.**

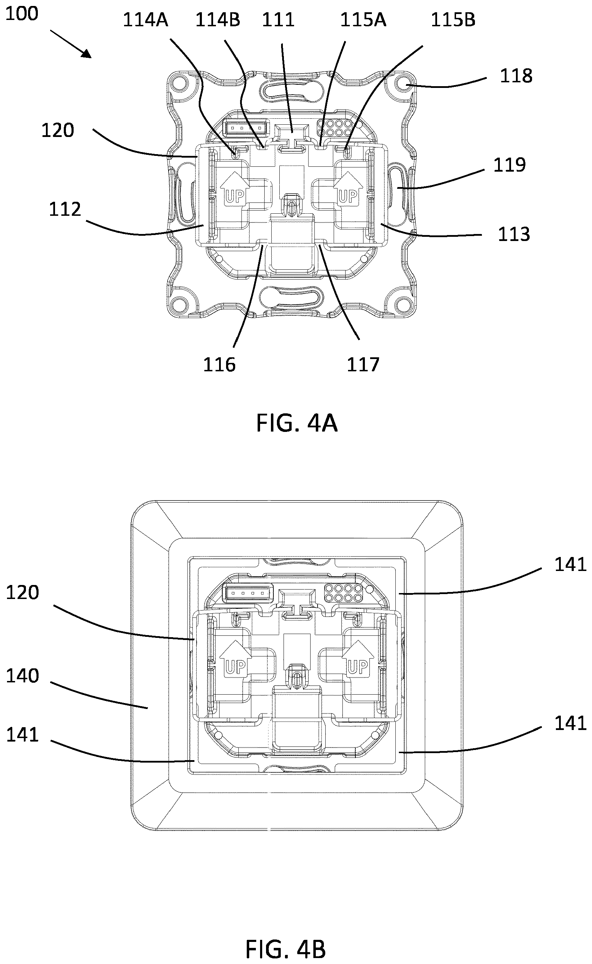

FIG. 4A illustrates a front view of a body part **110** with a spring element **120.** The body part **110** comprises a guide **111** to guide the spring element **120** equally positioned in respect to the sides and centre of the body part **110.** Guides **112, 113** are guiding the spring element in order to press the protrusions of a frame (not shown). The spring element **120** is attached to the body part **110** with locking means comprising a protrusion **114A, 115A** and a hook **114B, 115B,** and fixing means **116, 117.** The fixing means **116, 117** are hook shaped fixing means. The body part **110** further comprises openings **118, 119** for attaching the body part **110** to a socket box (not shown) inside a surface.

FIG. 4B illustrates a front view of an assembled system **100** without a cover. A spring element **120** is attached to the body part **110** and the spring element **120** presses with a force on protrusions **141** of a frame to keep the frame **140** attached to the body part **110.**

FIG. 5A illustrates a front view of a spring element **120** comprising of nine portions: a first portion **121,** a second portion **122,** a third portion **123,** a fourth portion **124,** a fifth portion **125,** a sixth portion **126,** a seventh portion **127,** an eight portion **128,** a ninth portion **129.** Each portion has a first end and a second end. The first end of the first portion **121** and the second end of the ninth portion **129** is an open end. The first end of the first portion **121** and the second end of the ninth portion **129** are facing to each other. The second portion **122** is attached by its first end to the second end of the first portion **121.** The third portion **123** is attached by its first end to the second end of the second portion **122.** The fourth portion **124** is attached by its first end to the second end of the third portion **123.** The fifth portion **125** is attached by its first end to the second end of the fourth portion **124.** The sixth portion **126** is attached by its first end to the second end of the fifth portion **125.** The seventh portion **127** is attached by its first end to the second end of the sixth portion **126.** The eighth portion **128** is attached by its first end to the second end of the seventh portion **127.** The ninth portion **129** is attached by its first end to the second end of the eighth portion **128** and has its second end as an open end. The portions form an open loop-like structure having generally a rectangular shape.

FIG. 5B illustrates a bottom view of a spring element **120** comprising a first portion (not shown), a second portion (not shown), a third portion (not shown), a fourth portion **124,** a fifth portion **125,** a sixth portion **126,** a seventh portion (not shown), an eight portion (not shown), a ninth portion (not shown). An angle between the fourth portion **124** and the fifth portion **125** is 150 degrees. An angle between the fifth portion **125** and the sixth portion **126** is 150 degrees.

FIG. 5C illustrates a side view of a spring element **120** comprising a first portion **121,** a second portion **122,** a third portion **123,** a fourth portion **124,** a fifth portion (not shown), a sixth portion (not shown), a seventh portion (not shown), an eight portion (not shown), a ninth portion (not shown). The first portion **121** defines a first plane. The second portion 122 defines a second plane. The third portion **123** defines a third plane parallel to the first plane. The fourth portion **124** is in the first plane. The angle between the first plane **121** and the second plane **122** is 150 degrees.

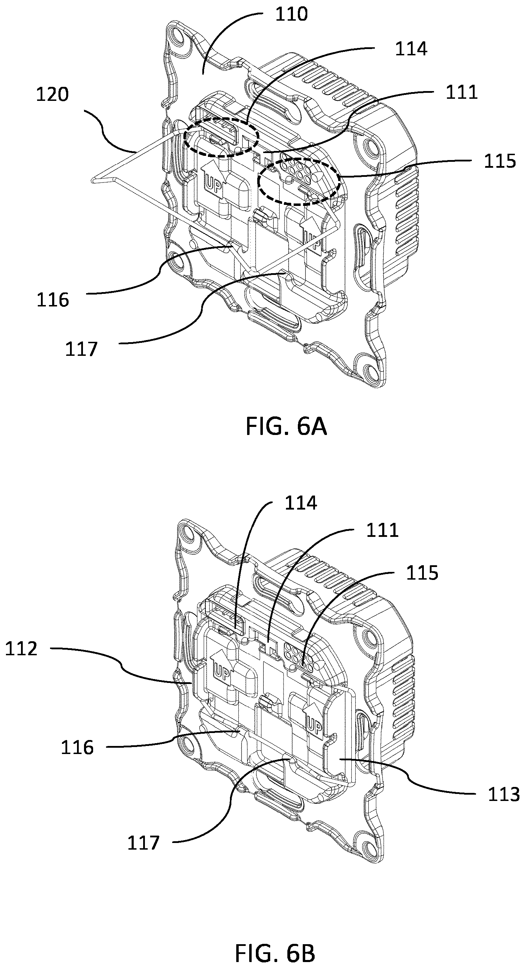

FIG. 6A illustrates a general view of a body part **110** with a spring element **120** in an open position. The spring element **120** is attached to the body part **110** with the locking means **114, 115** allowing pivotable movement of the spring element in respect to the locking means **114, 115.** A guide **111** keeps the spring element **120** in an equal position in respect to the sides and the centre of the body part **110.** The spring element is not attached with the fixing means **116, 117.**

FIG. 6B illustrates a general view of a body part **110** with a spring element **120** in a closed position. The spring element **120** is attached to the body part **110** with the locking means **114, 115.** A guide **111** guides the spring element **120** to be in an equal position in respect to the sides and the centre of the body part **110.** Guides **112, 113** are guiding the spring element 120 on the sides of the body part **120.** The spring element is attached with the fixing means **116, 117** in a fixed position. The fixing means **116, 117** are prohibiting pivotable movement of the spring element in respect to the locking means **114, 115.**

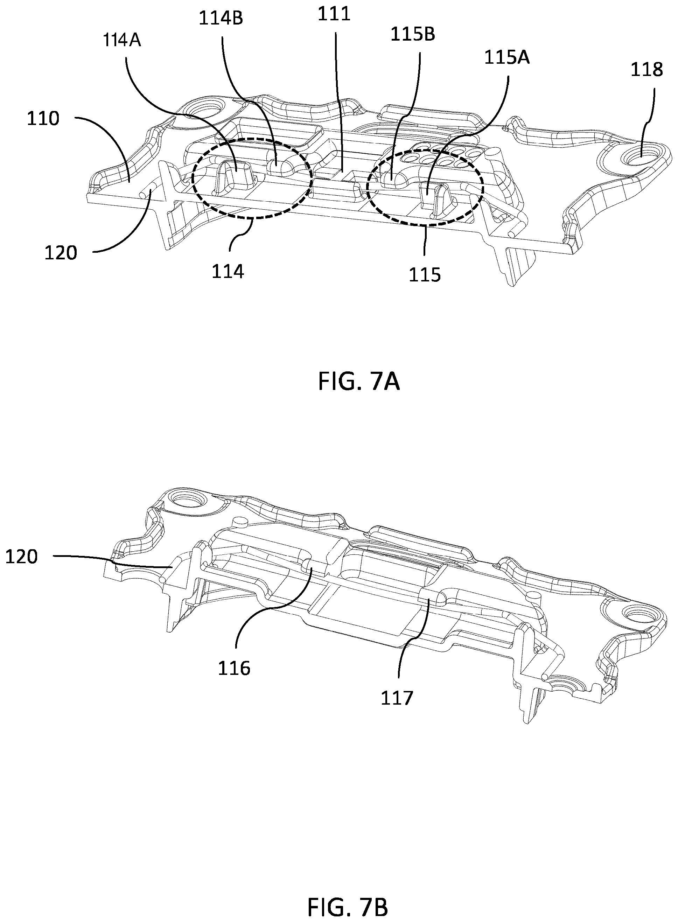

FIG. 7A illustrates a section view from bottom of a body part **110** with a spring element **120** in closed position. The spring element **120** is attached to the body part **110** with the locking means **114, 115** comprising a protrusion **114A, 115A** and a hook **114B, 115B.** A guide **111** guides the spring element **120** to be in an equal position in respect to the sides and the centre of the body part **110.** Guides **112, 113** are guiding the spring element **120** on a side of the body part **110.**

FIG. 7B illustrates a section view from top of a body part **110** with a spring element **120** in closed position. The spring element is attached with the fixing means **116, 117** in a fixed position. The fixing means **116, 117** are prohibiting pivotable movement of the spring element in respect to the locking means (not shown).

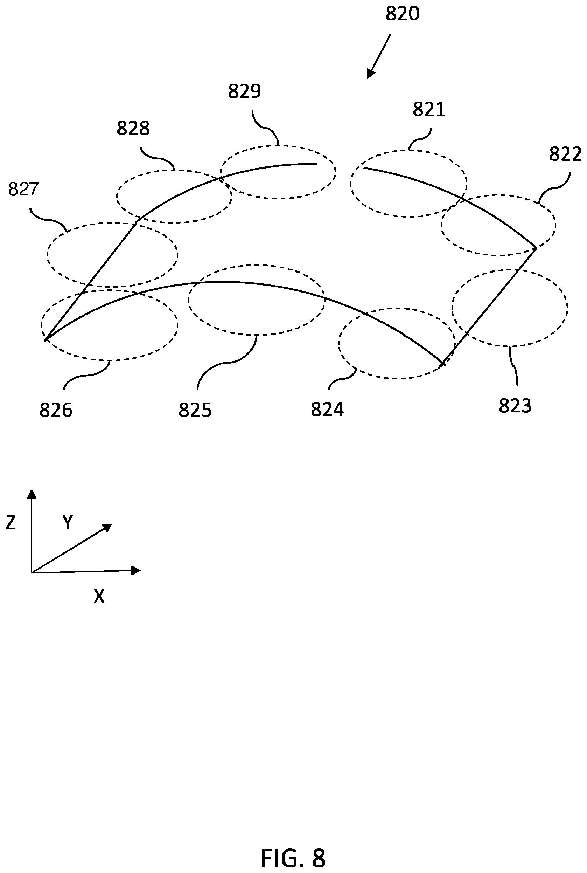

Fig. 8 is an 3D illustration (in respect to co-ordinates X, Y, Z as indicated in the figure) of a spring element **820.** The spring element comprises nine portions. The portions in relation to the spring element **820** are indicated with dashed line circles. A first portion **821,** a second portion **822,** a third portion **823,** a fourth portion **824,** a fifth portion **825,** a sixth portion **826,** a seventh portion **827,** an eight portion **828,** a ninth portion **829.** Each portion has a first end and a second end. Portions are connected to each others as illustrated. The portions form an open loop-like structure having generally a rectangular shape as seen from direction of Z axis. From direction of positive Y axis, the fourth portion **824,** the fifth portion **825** for an arc. The first portion **821,** the second portion **822** form a half arch as well as the eight portion **828** and the ninth portion **829.** Purpose of the arch like form is to create a force when the spring is in use.

## Claims

1. A system (100) comprising:
- a frame (140) comprising:
o an opening,
o a protrusion (141) arranged in the opening on an inner side of the frame (140);
- a spring element (120);
- a body part (110, 210) comprising:
o a guide (111, 112, 113) arranged to guide the spring element (120) with respect to the body part (110, 210) and the frame (140),
o attaching means (114, 115, 116, 117) arranged to removably attach the spring element (120) onto the body part (110, 210), wherein the attaching means comprise:
▪ locking means (114, 115) configured to lock the spring element (120) pivotably onto the body part, and
▪ fixing means (116, 117) configured to fix the spring element (120) on the body part (110, 210);
wherein the spring element is arranged to press the protrusion of the frame with a force to flexibly fix the frame (140) onto the body part (110, 210) while the spring element is attached onto the body part with the locking means (114, 115) and the fixing means (116, 117).

2. A system (100) according to claim 1 further comprising a cover (150,250) configured to be attached on the body part (110, 210) via the opening (118, 119) in the frame.

3. A system (100) according to claims 1 or 2, wherein the guide (111, 112, 113) comprises protrusions on the body part (110, 210).

4. A system (100) according to any of the preceding claims, wherein the locking means (114, 115) are selected as at least one of: tubular shaped locking means, clips, brackets, clamps, anchors, rivets.

5. A system (100) according to any of the preceding claims, wherein the fixing means (116, 117) are selected as at least one of: hook shaped fixing means, screws, clips, brackets, clamps, anchors, rivets.

6. A system (100) according to any of the preceding claims, wherein the spring element (120) comprises at least nine portions, wherein
- each portion has a first end and a second end, a distance between a first end and a second end of a given portion defines a length of the given portion, wherein a cross-sectional dimension of each portion lies between 0.7 to 1.1 mm and wherein the portions form an open loop-like structure, wherein the at least nine portions comprise:
a. a first portion (121) has a length of 17 to 19 mm, wherein the first end of the first portion is an open end, and wherein the first portion is arranged to be pivotably attached with the locking means (114, 115) onto the body part (110, 210);
b. a second portion (122) attached by its first end to the second end of the first portion, the second portion having a length from 7 to 11 mm,
c. a third portion (123) attached by its first end to the second end of the second portion, the third portion having a length from 29 to 32 mm, wherein the third portion (123) is arranged to press the protrusion (141) of the frame (140) with the force, when the spring element (120) is attached with the attaching means (114, 115, 116, 117),
d. a fourth portion (124) attached by its first end to the second end of the third portion, wherein the fourth portion has a length from 7 to 11 mm,
e. a fifth portion (125) attached by its first end to the second end of the fourth portion, having a length from 34 to 38 mm, wherein the fifth portion is arranged to be attached with the fixing means (116, 117) onto the body part (110, 210),
f. a sixth portion (126) attached by its first end to the second end of the fifth portion, the sixth portion having a length from 7 to 11 mm,
g. a seventh portion (127) attached by its first end to the second end of the sixth portion, the seventh portion having a length from 29 to 32 mm, wherein the seventh portion (127) is arranged to press the protrusion (141) of the frame (140) with the force, when the spring element (120) is attached with the attaching means (114, 115, 116, 117),
h. an eighth portion (128) attached by its first end to the second end of the seventh portion, the eighth portion having a length from 7 to 11 mm,
i. a ninth portion (129) attached by its first end to the second end of the eight portion and having its second end as an open end, the ninth portion (129) having a length from 17 to 19 mm, wherein the ninth portion (129) is arranged to be pivotably attached with locking means (114, 115) onto the body part (110, 210).

7. A system according to claim 6, wherein
▪ the first portion (121), the fifth portion (125) and the ninth portion (129) define a first plane;
▪ the second portion (122) and the fourth portion (124) define a second plane, wherein an angle between the first plane (121) and the second plane (122) is from 150 to 170 degrees;
▪ the third portion (123) and the seventh portion (127) define a third plane, wherein the third plane is parallel to the first plane;
▪ the sixth portion (126) and the eighth portion (128) define a fourth plane, wherein an angle between the fourth plane and first plane is 30-100 degrees.

8. A system (100) according to claims 6 or 7, wherein the cross-section of each portion is equal.

9. A system (100) according to any of claims 6-8, wherein a distance between the first end of the first portion (121) and the second end of the ninth portion (129) is from 3 to 7 mm.

10. A system (100) according to preceding claims, wherein the spring element (120) is a hold down relay clip.

11. A system according to any of the preceding claims, wherein the body part (110, 210) comprises at least one opening for attaching the body part to a socket box.

12. A system (100) according to claim 2, wherein the system (100) is a thermostat, wherein the body part (110, 210) is configured to house electronics of the thermostat and the cover (150, 250) is a user interface part for the thermostat.

13. A method for attaching the system (100) of claim 1 to a socket box (280) under a surface (284, 286), the method comprising:
- attaching the body part (110, 210) to the socket box through an opening in the surface,
- attaching the spring element (120) to the body part (110, 210) with the locking means (114, 115), wherein the locking means (114, 115) are configured to lock the spring element (120) pivotably onto the body part,
- placing the frame (140) onto the body part (110, 210), the frame (140) comprising an opening and a protrusion (141) arranged in the opening on an inner side of the frame (140), and wherein the protrusion (141) at least partially covers the body part (110, 210) and the frame (140) at least partially covers the surface (284, 286),
- attaching the spring element (120) with the fixing means (116, 117),
wherein the fixing means (116, 117) are configured to fix the spring element (120) on the body part (110, 210), wherein the spring element is arranged to press the protrusion of the frame, with a force to flexibly fix the frame (140) onto the body part (110, 210).

## Patentansprüche

1. System (100), umfassend:
- einen Rahmen (140) umfassend:
∘ eine Öffnung,
∘ einen Vorsprung (141), der in der Öffnung auf einer Innenseite des Rahmens (140) angeordnet ist;
- ein Federelement (120);
- ein Körperteil (110, 210), umfassend:
o eine Führung (111, 112, 113), die so angeordnet ist, dass sie das Federelement (120) in Bezug auf das Körperteil (110, 210) und den Rahmen (140) führt,
o Befestigungsmittel (114, 115, 116, 117), die so angeordnet sind, dass sie das Federelement (120) lösbar an dem Körperteil (110, 210) befestigen, wobei die Befestigungsmittel umfassen:
▪ Verriegelungsmittel (114, 115), die so konfiguriert sind, dass sie das Federelement (120) schwenkbar an dem Körperteil verriegeln, und
▪ Befestigungsmittel (116, 117), die so konfiguriert sind, dass sie das Federelement (120) an dem Körperteil (110, 210) befestigen;
wobei das Federelement so angeordnet ist, dass es mit einer Kraft auf den Vorsprung des Rahmens drückt, um den Rahmen (140) flexibel an dem Körperteil (110, 210) zu befestigen, während das Federelement mit den Verriegelungsmitteln (114, 115) und den Befestigungsmitteln (116, 117) an dem Körperteil befestigt ist.

2. System (100) nach Anspruch 1, das ferner eine Abdeckung (150,250) umfasst, die so konfiguriert ist, dass sie über die Öffnung (118, 119) im Rahmen am Körperteil (110, 210) befestigt ist.

3. System (100) nach Anspruch 1 oder 2, wobei die Führung (111, 112, 113) Vorsprünge an dem Körperteil (110, 210) umfasst.

4. System (100) nach einem der vorstehenden Ansprüche, wobei die Verriegelungsmittel (114, 115) als mindestens eines der folgenden ausgewählt sind: rohrförmige Verriegelungsmittel, Klammern, Halterungen, Klemmen, Anker, Nieten.

5. System (100) nach einem der vorstehenden Ansprüche, wobei die Befestigungsmittel (116, 117) als mindestens eines der folgenden ausgewählt sind: hakenförmige Befestigungsmittel, Schrauben, Klammern, Halterungen, Klemmen, Anker, Nieten.

6. System (100) nach einem der vorstehenden Ansprüche, wobei das Federelement (120) mindestens neun Abschnitte umfasst, wobei
- jeder Abschnitt ein erstes und ein zweites Ende aufweist, ein Abstand zwischen einem ersten und einem zweiten Ende eines gegebenen Abschnitts eine Länge des gegebenen Abschnitts definiert, wobei eine Querschnittsabmessung jedes Abschnitts zwischen 0,7 und 1,1 mm liegt und wobei die Abschnitte eine offene schleifenartige Struktur bilden, wobei die mindestens neun Abschnitte umfassen:
a. einen ersten Abschnitt (121) mit einer Länge von 17 bis 19 mm, wobei das erste Ende des ersten Abschnitts ein offenes Ende ist und wobei der erste Abschnitt so angeordnet ist, dass er schwenkbar mit der Verriegelungseinrichtung (114, 115) an dem Körperteil (110, 210) befestigt ist;
b. einen zweiten Abschnitt (122), der mit seinem ersten Ende am zweiten Ende des ersten Abschnitts befestigt ist, wobei der zweite Abschnitt eine Länge von 7 bis 11 mm aufweist,
c. einen dritten Abschnitt (123), der mit seinem ersten Ende am zweiten Ende des zweiten Abschnitts befestigt ist, wobei der dritte Abschnitt eine Länge von 29 bis 32 mm aufweist, wobei der dritte Abschnitt (123) so angeordnet ist, dass er mit der Kraft auf den Vorsprung (141) des Rahmens (140) drückt, wenn das Federelement (120) mit den Befestigungsmitteln (114, 115, 116, 117) befestigt ist,
d. einen vierten Abschnitt (124), der mit seinem ersten Ende am zweiten Ende des dritten Abschnitts befestigt ist, wobei der vierte Abschnitt eine Länge von 7 bis 11 mm aufweist,
e. einen fünften Abschnitt (125), der mit seinem ersten Ende am zweiten Ende des vierten Abschnitts befestigt ist und eine Länge von 34 bis 38 mm aufweist, wobei der fünfte Abschnitt so angeordnet ist, dass er mit den Befestigungsmitteln (116, 117) am Körperteil (110, 210) befestigt ist,
f. einen sechsten Abschnitt (126), der mit seinem ersten Ende am zweiten Ende des fünften Abschnitts befestigt ist, wobei der sechste Abschnitt eine Länge von 7 bis 11 mm aufweist,
g. einen siebten Abschnitt (127), der mit seinem ersten Ende am zweiten Ende des sechsten Abschnitts befestigt ist, der siebte Abschnitt eine Länge von 29 bis 32 mm aufweist, wobei der siebte Abschnitt (127) so angeordnet ist, dass er mit der Kraft auf den Vorsprung (141) des Rahmens (140) drückt, wenn das Federelement (120) mit den Befestigungsmitteln (114, 115, 116, 117) befestigt ist,
h. einen achten Abschnitt (128), der mit seinem ersten Ende am zweiten Ende des siebten Abschnitts befestigt ist, wobei der achte Abschnitt eine Länge von 7 bis 11 mm aufweist,
i. einen neunten Abschnitt (129), der mit seinem ersten Ende am zweiten Ende des achten Abschnitts befestigt ist und dessen zweites Ende ein offenes Ende ist, wobei der neunte Abschnitt (129) eine Länge von 17 bis 19 mm aufweist, wobei der neunte Abschnitt (129) so angeordnet ist, dass er mit Verriegelungsmitteln (114, 115) schwenkbar am Körperteil (110, 210) befestigt ist.

7. System nach Anspruch 6, wobei
▪ der erste Abschnitt (121), der fünfte Abschnitt (125) und der neunte Abschnitt (129) eine erste Ebene definieren;
▪ der zweite Abschnitt (122) und der vierte Abschnitt (124) eine zweite Ebene definieren, wobei ein Winkel zwischen der ersten Ebene (121) und der zweiten Ebene (122) von 150 bis 170 Grad beträgt;
▪ der dritte Abschnitt (123) und der siebte Abschnitt (127) eine dritte Ebene definieren, wobei die dritte Ebene parallel zur ersten Ebene ist;
▪ der sechste Abschnitt (126) und der achte Abschnitt (128) eine vierte Ebene definieren, wobei ein Winkel zwischen der vierten Ebene und der ersten Ebene 30-100 Grad beträgt.

8. System (100) nach Anspruch 6 oder 7, wobei der Querschnitt jedes Abschnitts gleich ist.

9. System (100) nach einem der Ansprüche 6-8, wobei ein Abstand zwischen dem ersten Ende des ersten Abschnitts (121) und dem zweiten Ende des neunten Abschnitts (129) von 3 bis 7 mm beträgt.

10. System (100) nach einem der vorstehenden Ansprüchen, wobei das Federelement (120) eine Halteklammer für ein Relais ist.

11. System nach einem der vorstehenden Ansprüche, wobei das Körperteil (110, 210) mindestens eine Öffnung zum Befestigen des Körperteils an einer Steckdosendose umfasst.

12. System (100) nach Anspruch 2, wobei das System (100) ein Thermostat ist, wobei das Körperteil (110, 210) so konfiguriert ist, dass es die Elektronik des Thermostats aufnimmt, und die Abdeckung (150, 250) ein Benutzerschnittstellenteil für den Thermostat ist.

13. Verfahren zum Befestigen des Systems (100) nach Anspruch 1 an einer Steckdosendose (280) unter einer Oberfläche (284, 286), wobei das Verfahren umfasst:
- Befestigen des Körperteils (110, 210) an der Steckdosendose durch eine Öffnung in der Oberfläche,
- Befestigen des Federelements (120) an dem Körperteil (110, 210) mit den Verriegelungsmitteln (114, 115), wobei die Verriegelungsmittel (114, 115) dazu konfiguriert sind, das Federelement (120) schwenkbar an dem Körperteil zu verriegeln,
- Aufsetzen des Rahmens (140) auf das Körperteil (110, 210), wobei der Rahmen (140) eine Öffnung und einen in der Öffnung angeordneten Vorsprung (141) auf einer Innenseite des Rahmens (140) aufweist, und wobei der Vorsprung (141) das Körperteil (110, 210) zumindest teilweise bedeckt und der Rahmen (140) die Oberfläche (284, 286) zumindest teilweise bedeckt,
- Befestigen des Federelements (120) mit den Befestigungsmitteln (116, 117),
wobei die Befestigungsmittel (116, 117) dazu konfiguriert sind, das Federelement (120) an dem Körperteil (110, 210) zu befestigen, wobei das Federelement so angeordnet ist, dass es mit einer Kraft auf den Vorsprung des Rahmens drückt, um den Rahmen (140) flexibel an dem Körperteil (110, 210) zu befestigen.

## Revendications

1. Système (100) comprenant :
- un cadre (140) comprenant :
∘ une ouverture,
∘ une protubérance (141) agencée dans l'ouverture sur un côté intérieur du cadre (140) ;
- un élément ressort (120) ;
- une partie corps (110, 210) comprenant :
∘ un guide (111, 112, 113) agencé pour guider l'élément ressort (120) par rapport à la partie corps (110, 210) et au cadre (140),
∘ des moyens d'attache (114, 115, 116, 117) agencés pour attacher de manière amovible l'élément ressort (120) sur la partie corps (110, 210), dans lequel les moyens d'attache comprennent :
▪ des moyens de verrouillage (114, 115) conçus pour verrouiller l'élément ressort (120) de manière pivotante sur la partie corps, et
▪ des moyens de fixation (116, 117)conçus pour fixer l'élément ressort (120) sur la partie corps (110, 210) ;
dans lequel l'élément ressort est agencé pour appuyer sur la protubérance du cadre avec une force pour fixer de manière flexible le cadre (140) sur la partie corps (110, 210) tandis que l'élément ressort est attaché sur la partie corps avec les moyens de verrouillage (114, 115) et les moyens de fixation (116, 117).

2. Système (100) selon la revendication 1, comprenant en outre un couvercle (150, 250) conçu pour être attaché sur la partie corps (110, 210) par le biais de l'ouverture (118, 119) dans le cadre.

3. Système (100) selon les revendications 1 ou 2, dans lequel le guide (111, 112, 113) comprend des protubérances sur la partie corps (110, 210).

4. Système (100) selon l'une quelconque des revendications précédentes, dans lequel les moyens de verrouillage (114, 115) sont choisis parmi au moins l'un parmi : des moyens de verrouillage de forme tubulaire, des pinces, des supports, des colliers, des ancres, des rivets.

5. Système (100) selon l'une quelconque des revendications précédentes, dans lequel les moyens de fixation (116, 117) sont choisis parmi au moins l'un parmi des moyens de fixation en forme de crochet, des vis, des pinces, des supports, des colliers, des ancres, des rivets.

6. Système (100) selon l'une quelconque des revendications précédentes, dans lequel l'élément ressort (120) comprend au moins neuf portions, dans lequel
- chaque portion a une première extrémité et une seconde extrémité, une distance entre une première extrémité et une seconde extrémité d'une portion donnée définit une longueur de la portion donnée, dans lequel une dimension de section transversale de chaque portion est comprise entre 0,7 et 1,1 mm et dans lequel les portions forment une structure en forme de boucle ouverte, dans lequel les au moins neuf portions comprennent :
a. une première portion (121) a une longueur de 17 à 19 mm, dans lequel la première extrémité de la première portion est une extrémité ouverte, et dans lequel la première portion est agencée pour être attachée de manière pivotante avec les moyens de verrouillage (114, 115) sur la partie corps (110, 210) ;
b. une deuxième portion (122) attachée par sa première extrémité à la seconde extrémité de la première portion, la deuxième portion ayant une longueur de 7 à 11 mm,
c. une troisième portion (123) attachée par sa première extrémité à la seconde extrémité de la deuxième portion, la troisième portion ayant une longueur de 29 à 32 mm, dans lequel la troisième portion (123) est agencée pour appuyer sur la protubérance (141) du cadre (140) avec la force, lorsque l'élément ressort (120) est attaché avec les moyens d'attache (114, 115, 116, 117),
d. une quatrième portion (124) attachée par sa première extrémité à la seconde extrémité de la troisième portion, dans lequel la quatrième portion a une longueur comprise entre 7 et 11 mm,
e. une cinquième portion (125) attachée par sa première extrémité à la seconde extrémité de la quatrième portion, ayant une longueur de 34 à 38 mm, dans lequel la cinquième portion est agencée pour être attachée avec les moyens de fixation (116, 117) sur la partie corps (110, 210),
f. une sixième portion (126) attachée par sa première extrémité à la seconde extrémité de la cinquième portion, la sixième portion ayant une longueur de 7 à 11 mm,
g. une septième portion (127) attachée par sa première extrémité à la seconde extrémité de la sixième portion, la septième portion ayant une longueur de 29 à 32 mm, dans lequel la septième portion (127) est agencée pour appuyer sur la protubérance (141) du cadre (140) avec la force, lorsque l'élément ressort (120) est attaché avec les moyens d'attache (114, 115, 116, 117),
h. une huitième portion (128) attachée par sa première extrémité à la seconde extrémité de la septième portion, la huitième portion ayant une longueur de 7 à 11 mm,
i. une neuvième portion (129) attachée par sa première extrémité à la seconde extrémité de la huitième portion et ayant sa seconde extrémité comme une extrémité ouverte, la neuvième portion (129) ayant une longueur de 17 à 19 mm, dans lequel la neuvième portion (129) est agencée pour être attachée de manière pivotante avec des moyens de verrouillage (114, 115) sur la partie corps (110, 210).

7. Système selon la revendication 6, dans lequel
▪ la première portion (121), la cinquième portion (125) et la neuvième portion (129) définissent un premier plan ;
▪ la deuxième portion (122) et la quatrième portion (124) définissent un deuxième plan, dans lequel un angle entre le premier plan (121) et le deuxième plan (122) est compris entre 150 et 170 degrés ;
▪ la troisième portion (123) et la septième portion (127) définissent un troisième plan, dans lequel le troisième plan est parallèle au premier plan ;
▪ la sixième portion (126) et la huitième portion (128) définissent un quatrième plan, dans lequel un angle entre le quatrième plan et le premier plan est de 30 à 100 degrés.

8. Système (100) selon les revendications 6 ou 7, dans lequel la section transversale de chaque portion est égale.

9. Système (100) selon l'une quelconque des revendications 6 à 8, dans lequel une distance entre la première extrémité de la première portion (121) et la seconde extrémité de la neuvième portion (129) est comprise entre 3 et 7 mm.

10. Système (100) selon les revendications précédentes, dans lequel l'élément ressort (120) est une pince de relais de retenue.

11. Système selon l'une quelconque des revendications précédentes, dans lequel la partie corps (110, 210) comprend au moins une ouverture pour attacher la partie corps à un boîtier de prise.

12. Système (100) selon la revendication 2, dans lequel le système (100) est un thermostat, dans lequel la partie corps (110, 210) est conçue pour abriter des composants électroniques du thermostat et le couvercle (150, 250) est une partie de l'interface utilisateur pour le thermostat.

13. Procédé d'attache du système (100) selon la revendication 1 à un boîtier de prise (280) sous une surface (284, 286), le procédé comprenant :
- l'attache de la partie corps (110, 210) au boîtier de prise par une ouverture dans la surface,
- l'attache de l'élément ressort (120) à la partie corps (110, 210) avec les moyens de verrouillage (114, 115), dans lequel les moyens de verrouillage (114, 115) sont conçus pour verrouiller l'élément ressort (120) de manière pivotante sur la partie corps,
- le placement du cadre (140) sur la partie corps (110, 210), le cadre (140) comprenant une ouverture et une protubérance (141) agencée dans l'ouverture sur un côté intérieur du cadre (140), et dans lequel la protubérance (141) recouvre au moins partiellement la partie corps (110, 210) et le cadre (140) recouvre au moins partiellement la surface (284, 286),
- l'attache de l'élément ressort (120) avec les moyens de fixation (116, 117),
dans lequel les moyens de fixation (116, 117) sont conçus pour fixer l'élément ressort (120) sur la partie corps (110, 210), dans lequel l'élément ressort est agencé pour appuyer sur la protubérance du cadre, avec une force permettant de fixer de manière flexible le cadre (140) sur la partie corps (110, 210).
